(19) Europäisches Patentamt
European Patent Office
Office européen des brevets

(11) **EP 1 935 953 B1**

(12) **EUROPEAN PATENT SPECIFICATION**

(45) Date of publication and mention
of the grant of the patent:
**01.12.2010 Bulletin 2010/48**

(51) Int Cl.:
*C09D 133/06* (2006.01)    *C09D 151/00* (2006.01)
*C09D 163/00* (2006.01)

(21) Application number: **07254978.5**

(22) Date of filing: **20.12.2007**

(54) **Emulsion based polymer adhesive**

Klebstoff auf Polymerbasis

Adhésif de polymère à base d'émulsion

(84) Designated Contracting States:
**DE FR GB IT**

(30) Priority: **22.12.2006  US 876845 P**

(43) Date of publication of application:
**25.06.2008  Bulletin 2008/26**

(73) Proprietor: **ROHM AND HAAS COMPANY**
**Philadelphia,**
**Pennsylvania 19106-2399 (US)**

(72) Inventor: **Even, Ralph Craig**
**Blue Bell**
**Pennsylvania 19422 (US)**

(74) Representative: **Buckley, Guy Julian et al**
**Patent Outsourcing Limited**
**1 King Street**
**Bakewell**
**Derbyshire DE45 1DZ (GB)**

(56) References cited:
**EP-A- 1 780 250**

## Description

The present invention relates to an aqueous dispersion of an improved water-insoluble latex polymer. The present invention further relates to emulsion-type pressure-sensitive adhesive articles comprising the aqueous dispersion of the improved water soluble latex.

A high degree of resistance to water whitening, especially hot water, by pressure-sensitive adhesives (PSAs) is required for adhesive applications. For example, bottles labeled with clear film PSA labels can be subjected to pasteurization conditions where the label is expected to remain clear through the process. Historically, solvent based adhesives have been used for such demanding applications. Environmental considerations, however, favor elimination of solvents. This and higher coating speeds attainable with emulsion PSAs, favor their use in place of solvent based PSAs.

Emulsion based PSA polymers are made in the presence of surfactants and other water soluble electrolytes such as initiators. In addition, comonomers such as unsaturated carboxylic acids are employed to impart or enhance adhesive properties and tend to be present at the latex-particle interface and remain there during film formation. Films cast from such emulsions are sensitive to water and become cloudy simply when a drop of water is placed on the film. Water whitening is almost always assured when the water is hot, e.g., the temperature of the water is 70 °C or higher.

The water resistance of acrylic emulsion polymer films has long been addressed in the art particularly with respect to paint films. The art has observed that the presence of water soluble electrolytes, surfactants and polyelectrolytes such as sodium polymethacrylate cause or enhance water sensitivity ("The Applications of Synthetic Resin Emulsions", H. Warson, Ernest Benn Ltd., London, 1972, incorporated herein by reference). It is also well known that surfactants are migratory species that with time move towards and bloom to the surface of films also rendering them water sensitive.

The art has taught that the use of low levels of surfactant, a reduction or elimination in soluble electrolytes and crosslinking between the emulsion particles can all serve to improve or impart water resistance.

Other important properties related to PSA quality are peel and shear balance. Shear strength relates to how the adhesive responds to lateral stress caused by something pulling it sideways. This characteristic directly impacts how much weight the adhesive can carry. The peel strength relates to how strong a bond the adhesive has formed with a given surface, or in other words, how resistant the adhesive is to being peeled off of a given surface.

U.S. Pat. No. 6,060,532 discloses aqueous dispersions of water-insoluble latex polymer formed by a two stage process and compositions which are useful as coatings for flexible or rigid substrates. Although U.S. 6,060,532 attempts to solve the problems associated with peel/shear balance it does not address the issue of water whitening.

The present invention provides a latex polymer formed by a two stage polymerization process wherein polymers are prepared using one or more soft, hydrophilic, non-ionic monomers in a first stage polymerization and then a second stage polymerization is conducted. The polymer of the present invention exhibits a preferred level of peel in the first stage and a build on the shear property in the second stage without a loss of the peel property. Additionally, resistance in water whitening is maintained throughout the process.

As used herein, the use of the term "(meth)" followed by another term such as acrylate refers to both acrylates and methacrylates. For example, the term "(meth)acrylate" refers to either acrylate or methacrylate; the term "(meth)acrylic" refers to either acrylic or methacrylic; the term "(meth)acrylonitrile" refers to either acrylonitrile or methacrylonitrile; and the term "(meth)acrylamide" refers to either acrylamide or methacrylamide.

"Glass transition temperature" or "Tg" as used herein, means the temperature at or above which a glassy polymer will undergo segmental motion of the polymer chain. Glass transition temperatures of a polymer can be estimated by the Fox equation [Bulletin of the American Physical Society, 1, 3, p.123 (1956)] as follows:

$$\frac{1}{T_g} = \frac{w_1}{T_{g(1)}} + \frac{w_2}{T_{g(2)}}$$

For a copolymer, $w_1$ and $w_2$ refer to the weight fraction of the two comonomers, and $T_{g(1)}$ and $T_{g(2)}$ refer to the glass transition temperatures of the two corresponding homopolymers in degrees Kelvin. For polymers containing three or more monomers, additional terms are added $(w./Tg(.))$. The Tg of a polymer phase can also be calculated by using the appropriate values for the glass transition temperatures of homopolymers, which may be found, for example, in Polymer Handbook, edited by J. Brandrup and E. H. Immergut, Interscience Publishers [date]. The values of Tg reported herein are calculated using the Fox equation. When calculating the overall Tg of aqueous polymer dispersions having multiple weight average particle diameter distributions, a calculated Tg of each portion of the dispersion applies. More particularly, an overall Tg of a polymers dispersion would be calculated, using the Fox Equation, based upon all of the monomers in the dispersion.

As used herein "low water solubility" is defined as less than about 6% solubility in deionized $H_2O$ at 25°C.

In one embodiment of the present invention there is provided, a latex polymer prepared by a process comprising:

(a) preparing by emulsion polymerization a first stage polymer of at least one ethylenically unsaturated monomer, wherein said first stage polymer comprises:

i) at least 40% of a monomer having a homopolymer Tg of less than 40°C; and

ii) 10 to 50% of a soft hydrophilic, nonionic monomer having a homopolymer Tg of less than 30°C;

(b) dispersing in the first stage polymer, additional ethylenically unsaturated monomer comprising at least one monomer having at least two sites of alpha, beta-ethylenic unsaturation, whereby the additional monomer swells the first stage polymer, and

(c) polymerizing the additional monomer within the monomer-swollen first stage polymer.

In another embodiment of the present invention, there is provided an adhesive product comprising the aforementioned latex polymer wherein the adhesive product is used in tape, label, or graphics applications.

The preparation of aqueous dispersions of water-insoluble latex polymers by emulsion polymerization is well known in the art. The practice of emulsion polymerization is discussed in detail in D. C. Blackley, Emulsion Polymerization (Wiley, 1975). Conventional emulsion polymerization techniques may be used to prepare the first stage of water-insoluble latex polymer of this invention. The practice of emulsion polymerization is also discussed in H. Warson, The Applications of Synthetic Resin Emulsions, Chapter 2 (Ernest Benn Ltd., London 1972).

Thus, monomers may be emulsified with an anionic, cationic or nonionic dispersing agent, using for example from about 0.25% to 5% by weight of dispersing agent on the weight of total monomers. Combinations of anionic and nonionic emulsifiers may also be used. High molecular weight polymers such as hydroxy ethyl cellulose, methyl cellulose and polyvinyl alcohol may be used as emulsion stabilizers and protective colloids, as may polyelectrolytes such as polyacrylic acid. Acidic monomers, particularly those of low molecular weight, such as acrylic and methacrylic acid, are watersoluble, and thus may serve as dispersing agents which aid in emulsifying the other monomers used.

Suitable cationic dispersion agents include lauryl-pyridinium chlorides, cetyldimethyl amine acetate, and alkyldimethylbenzylammonium chlorides in which the alkyl group has from 8 to 18 carbon atoms.

Suitable anionic dispersing agents include, for example, the higher fatty alcohol sulfates, such as sodium lauryl sulfate, and the like; alkylaryl sulfonates such as sodium or potassium isopropylbenzene sulfonates or isopropyl naphthalene sulfonates, and the like; alkali metal higher alkyl sulfosuccinates, such as sodium octyl sulfosuccinate, sodium N-methyl, N-palmitoyltaurate, sodium oleyl isothionate, and the like; and alkali metal salts of alkylarylpolyethoxyethanol sulfates or sulfonates, such as sodium tert-octylphenoxypolyethoxyethyl sulfate having 1 to 5 oxyethylene units, and the like.

Suitable non-ionic dispersing agents include alkylphenoxypolyethoxyethanols having alkyl groups of from about 7 to 18 carbon atoms and from about 6 to about 60 oxyethylene units, such as heptylphenoxypolyethoxyethanols, methyloctylphenoxypolyethoxyethanols, and the like; polyethoxyethanol derivatives of methylene-linked alkyl phenols; sulfur-containing agents such as those made by condensing from about 6 to about 60 moles of ethylene oxide with nonyl mercaptan, dodecyl mercaptan, and the like, or with alkylthiophenols wherein the alkyl groups contain from 6 to 16 carbon atoms; ethylene oxide derivatives of long-chained carboxylic acids, such as lauric acid, myristic acid, palmitic acid, oleic acid, and the like, or mixtures of acids such as those found in tall oil containing from 6 to 60 oxyethylene units per molecule; analagous ethylene oxide condensates of long-chained alcohols such as octyl, decyl, lauryl, or cetyl alcohols, ethylene oxide derivative of etherified or esterified polyhydroxy compounds having a hydrophobic hydrocarbon chain, such as sorbitan monostearate containing from 6 to 60 oxyethylene units; also, ethylene oxide condensates of long-chain or branched chain amines, such as dodecyl amine, hexadecyl amine, and octadecyl amine, containing from 6 to 60 oxyethylene units; block copolymers of ethylene oxide sections combined with one or more hydrophobic propylene oxide sections. Mixtures of alkyl benzenesulfonates and ethoxylated alkylphenols may be employed.

A polymerization initiator of the free radical type, such as ammonium or potassium persulfate, may be used alone or as the oxidizing component of a redox system, which also includes a reducing component such as potassium metabisulfite, sodium thiosulfate or sodium formaldehyde sulfoxylate. The reducing component is frequently referred to as an accelerator. The initiator and accelerator, commonly referred to as catalyst, catalyst system or redox system, may be used in proportion from about 0.01% or less to 3% each, based on the weight of monomers to be copolymerized. Examples of redox catalyst systems include t-butyl hydroperoxide/sodium formaldehyde sulfoxylate/Fe(II), and ammonium persulfate/sodium bisulfite/sodium hydrosulfite/Fe(II). The polymerization temperature may be from room temperature to 90°C, or higher, and may be optimized for the catalyst system employed, as is conventional. Emulsion polymerization may be seeded or unseeded. Seeded polymerization is preferred and tends to yield aqueous dispersions of latex polymer having more uniform physical properties than unseeded polymerization.

Chain transfer agents including mercaptans, polymercaptans and polyhalogen compounds are sometimes desirable in the polymerization mixture to moderate polymer molecular weight. Examples of chain transfer agents which may be used include long chain alkyl mercaptans such as t-dodecyl mercaptans, alcohols such as isopropanol, isobutanol, lauryl alcohol or t-octyl alcohol, carbon tetrachloride, tetrachloroethylene and trichlorobromoethane. Generally from 0.05 to 0.5% by weight or from 0.05 to 0.25%, based on the weight of the monomer mixture used to form the first stage polymer, may be used.

The polymerization process may be a thermal or redox type; that is, free radicals may be generated solely by the thermal dissociation of an initiator species or a redox system may be used. A monomer emulsion containing all or some portion of the monomers to be polymerized may be prepared using the monomers, water and emulsifiers. A catalyst solution containing catalyst in water may be separately prepared. The monomer emulsion and catalyst solution may be co-fed into the polymerization vessel over the course of the emulsion polymerization. The reaction vessel itself may initially contain water. The reaction vessel may also additionally contain seed emulsion and further may additionally contain an initial charge of polymerization catalyst. The temperature of the reaction vessel during the emulsion polymerization may be controlled by cooling to remove heat generated by the polymerization reaction or by heating the reaction vessel. Several monomer emulsions may be simultaneously co-fed into the reaction vessel. When multiple monomer emulsions are co-fed, they may be of different monomer composition. The sequence and rates at which the diverse monomer emulsions are co-fed may be altered during the emulsion polymerization process. After addition of the monomer emulsion or emulsions has been completed, the polymerization reaction mixture may be chased to minimize the concentrations of unreacted monomer and unreacted polymerization catalyst species. The pH of the contents of the reaction vessel may also be altered during the course of the emulsion polymerization process. Both thermal and redox polymerization processes may be employed.

The monomers used in preparing the first stage polymer may be any of those conventionally used in the synthetic resin emulsion art. Acrylic monomers are preferred for preparing latex polymer to be used in adhesive coating compositions. Examples of acrylic monomers include the $(C_1-C_{24})$alkyl esters of acrylic and methacrylic acids. Examples of $(C_1-C_{24})$ alkyl groups of esters of acrylic and methacrylic acids which may be used in forming the first stage polymer used in the invention include: methyl, propyl, isopropyl, butyl, isobutyl, sec-butyl, t-butyl, amyl, isoamyl, t-amyl, hexyl, cyclohexyl, 2-ethylhexyl, octyl, decyl, lauryl, myristyl, cetyl, stearyl groups and the like. Specific examples include: methyl methacrylate, ethyl acrylate, or n-butyl acrylate, 2-ethylhexyl acrylate, lauryl methacrylate, isodecyl methacrylate, methyl acrylate, ethyl methacrylate, sec-butyl acrylate and t-butyl methacrylate. The $(C_1-C_{12})$alkyl esters of acrylic and methacrylic acid are preferred in preparing the instant latex polymer. The first stage polymer of the present invention comprises at least 40% by weight of total composition of at least one monomer having a homopolymer Tg of less than -40°C and 10 to 50% of at least one soft, hydrophilic, nonionic, monomer. As used herein, "soft monomer" refers to a monomer having a Tg of less than 30°C, preferably less than 10°C. Soft hydrophilic monomer has homopolymer Tg less than about 30°C and water solubility of about 2% or greater at 25°C (preferred ethyl acrylate, methyl acrylate, vinyl acetate)

Other monoethylenically unsaturated polymerizable monomers useful in minor proportion (i.e. less than 5% by weight of the total monomer composition) as comonomers with acrylic monomers in preparing the first stage polymer of this invention include the vinylidiene halides, vinyl halides, acrylonitrile, methacrylonitrile, vinyl esters such as vinyl formate, vinyl acetate and vinyl proprionate, and mixtures of ethylene and such vinyl esters, acrylic and methacrylic acid esters of alcohol ethers such as diethylene glycol monoethyl or monobutyl ether methacrylate, $(C_1-C_{10})$ alkyl esters of beta-acryloxypropionic acid and higher oligomers of acrylic acid, styrene and alkyl substituted styrenes and vinyl aromatics including alpha-methyl styrene, mixtures of ethylene and other alkylolefins such as propylene, butylene, pentene and the like, vinyl ethers such as methyl vinyl ether, ethyl vinyl ether, vinyl 2-methoxyethyl ether, vinyl 2-chloroethyl ether and the like. Butyl acrylate, 2-ethyl-hexyl acrylate, iso-octyl acrylate are especially preferred monomers for the first stage polymer. In some preferred embodiments the first stage polymer comprises from 0.25 to 5% of at least one nonionic monoethylenically unsaturated monomer having a homopolymer Tg of greater than 50°C, such as methyl methacrylate or styrene or other styrenic monomers.

Additional monoethylenically unsaturated polymerizable comonomers useful in preparing the first stage polymer of the invention include hydroxy functional vinyl monomers such as 2-hydroxyethyl methacrylate, 2-hydroxyethyl acrylate, 3-hydroxypropyl methacrylate, butanediol acrylate, 3-chloro-2-hydroxypropyl acrylate, 2-hydroxypropyl acrylate, and 2-hydroxypropyl methacrylate. Further examples of useful monomers include the partial esters of unsaturated aliphatic dicarboxylic acids and particularly the alkyl half esters of such acids. Examples of such partial esters are the alkyl half esters of itaconic acid, fumaric acid and maleic acid wherein the alkyl group contains 1 to 6 carbon atoms. Representative members of this group of compounds include methyl acid itaconic, butyl acid itaconic, ethyl acid fumarate, butyl acid fumarate, and methyl acid maleate. Minor amounts of other comonomers, such as adhesion promoting comonomers, may also be used. These monomers may be copolymerized with acrylic monomers to yield the first stage polymer.

Examples of alpha, beta-ethylenically unsaturated carboxylic acids which may be copolymerized with acrylic and other monomers in forming the first stage polymer of the invention include acrylic acid, methacrylic acid, beta-acryloxypropionic acid and higher oligomers of acrylic acid and mixtures thereof, ethacrylic acid, itaconic acid, aconitic acid, crotonic acid, citraconic acid, maleic acid, fumaric acid, alpha-chloroacrylic acid, cinnamic acid, mesaconic acid and mixtures thereof. Acrylic and methacrylic acids are preferred, and methacrylic acid is especially preferred. It is preferred that alpha, beta-ethylenically unsaturated carboxylic acid comprise an amount ranging from upper limits of 10, 5 or 3.5% to lower limits of 0.1, 0.25, or 0.5% by weight based on the total weight of monomer, of the first stage polymer monomer composition.

In addition to monoethylenically unsaturated monomer, small proportions of alpha, beta-ethylenically unsaturated monomer having at least two sites of alpha, beta-ethylenic unsaturation, that is, di-or multi-ethylenically unsaturated monomer, may be used as comonomer in preparing the first stage polymer. However, it is not necessary to employ any multi-ethylenically unsaturated monomer.

It is preferred that the monomer composition selected to yield a first stage polymer have a glass transition temperature (Tg) characteristic of a random copolymer of less than -20°C, -30°C, -40°C. These Tg values are chosen so that the formulated adhesive will exhibit good low temperature performance properties. First stage polymer with higher Tg may be used; however, it may also be desirable in this case to include materials to lower the Tg of the formulated adhesive, such as monomeric and polymeric plasticizers. The initial latex polymer may be prepared immediately prior to the addition of the additional alpha, beta-ethylenically unsaturated monomer. Alternatively, the first stage polymer may itself be a commercially available emulsion prepared at some time substantially removed from the addition of the additional monomer.

In some preferred embodiments, the first stage polymer may be formed in the presence of a polymerizable surfactant. Suitable ethylenically unsaturated surfactant monomers include, but are not limited to for example, salts or quaternary nitrogen compounds comprising at least one acid, wherein the acid is a sulfonic acid, a carboxylic acid, or a phosphoric acid, or a mixture thereof, and at least one nitrogenous base, wherein the nitrogenous base contains at least one nitrogen atom and at least on ethylenically unsaturated moiety. Other suitable examples are described in U. S. Pat. Publ. No. 2003/0149119.

Other suitable polymerizable surfactant monomers include nonylphenoxy propenyl polyethoxylated sulphate (for example as Hitenol™ from Daiichi Corp); sodium alkyl allyl sulphosuccinate (for example as Trem™ LF-40 from Henkel Corp); ammonium di-(tricyclo(5.2.1.0 2, 6) dec-3-en-(8 or 9)oxyethyl sulfosuccinate; and ammonium di-(tricyclo (5. 2.1.0 2,6) dec-3-en-(8 or 9) sulfosuccinate. Additionally, the ammonium and metal salts of unsaturated $C_6$ to $C_{30}$ organic acids can be used, alone or in combination with the above surfactants. Examples of these acids are: alpha methyl cinnamic acid, alpha phenyl cinnamic acid, oleic acid, lineolic acid (as described in U.S. Pat. No. 5,362,832), rincinoleic acid, the unsaturated fraction of Tall oil rosin and fatty acids, disproportionated rosin acid, soybean oil fatty acids, olive oil fatty acids, sunflower oil fatty acids, linseed oil fatty acids, safflower oil fatty acids, sorbitan mono-oleate, abietic acid, poly(oxyethylene) sorbitol sesquioleate, and Empol™ 1010 Dimer Acid. Additional suitable polymerizable surfactant monomers also include, for example, maleate derivatives (as described in U. S. Pat. No. 4,246,387), and allyl derivatives of alkyl phenol ethoxylates (as described in Japanese Pat. No.-62 227435). The amount of surfactant used is typically from 0.1% to 6% by weight, based on the total weight of monomer.

Furthermore, 2 to 50, preferably 5 to 30, wt%, based on weight of first stage polymer of a low molecular weight polymeric component having a number average molecular weight of less than about 35,000 and a softening point of at least 40°C, as described in US Patent 4,912,169 may be blended in as a separate dispersion or formed in the presence of the first and/or second stage polymer as a separate polymerization step. Alternately, the first stage polymer may be formed in the presence of a low molecular weight polymeric component.

After preparation of the first stage polymer and prior to the second stage, a polymerization inhibitor may be added or alternatively, the second stage in the process of preparing the compositions of this invention may be undertaken without the addition of the inhibitor. In the second step of this process, additional alpha, beta-ethylenically unsaturated monomer comprising at least one monomer having at least two sites of alpha, beta-ethylenically unsaturation, wherein said additional monomer has low water-solubility, is dispersed in the first stage aqueous dispersion of water insoluble latex polymer. Examples of alpha, beta-ethylenically unsaturated monomer having at least two sites of alpha, beta-ethylenically unsaturation include ethyleneglycol dimethacrylate, diethyleneglycol dimethacrylate, triethyleneglycol dimethacrylate, polyethylene glycol dimethacrylate, polypropyleneglycol dimethacrylate, neopentylglycol dimethacrylate, 1,3-butyleneglycol diacrylate, neopentylglycol diacrylate, trimethylolethane trimethacrylate, dipentaerythritol triacrylate, dipentaerythritol tetracrylate, dipentaerythritol pentaacrylate, dimethallyl chlorendate, diallyl chlorendate, diallyl fumarate, diallyl itaconate, diallyl phthalate, diallylisophthalate, triallyl isocyanate, triallyl trimellitate, 1,6-hexenediol diacrylate, 1,3-butylene glycol dimethacrylate, trimethylolpropane trimethacrylate, trimethylol propane triacrylate, tripropylene glycol diacrylate, diallyl methacrylate, and divinyl benzene.

It is preferred that the additional alpha, beta-ethylenically unsaturated monomer, comprises amounts ranging from upper limits of 10, or 7.5% to lower limits of 0.25% or 0.5% by weight based on the total weight of the first stage polymer. All monomer ranges are inclusive and combinable. It is preferred that monomer having at least two sites of alpha, beta-ethylenic unsaturation be selected from the group consisting of monomers having two sites of alpha, beta-ethylenic unsaturation and monomers having three sites of alpha, beta-ethylenic unsaturation. It is also preferred that monomers having two sites of alpha, beta-ethylenic unsaturation be selected from the diacrylates and dimethacrylates. It is also preferred that monomers having three sites of alpha, beta-ethylenic unsaturation be selected from the triacrylates and trimethacrylates. In another embodiment it is preferred that the monomer having two sites of alpha, beta-ethylenic unsaturation be selected from divinyl benzene and aliphatic conjugated dienes. Of the preferred diacrylates and dimethacrylates, diethylene glycol dimethacrylate, ethylene glycol dimethacrylate, 1,6-hexene diol diacrylate, 1,3-butylene glycol dimethacrylate, and tripropylene glycol diacrylate are especially preferred. Of the preferred triacrylates and trimethacrylates, trimethylol propane triacrylate and trimethylol propane trimethacrylate are especially preferred.

Other monomers useful as monomer having at least two sites of alpha, beta-ethylenic unsaturation include the reaction products of at least one compound selected from the diisocyanates and triisocyanates and at least one compound selected from hydroxy($C_1$-$C_6$)alkyl acrylates and the hydroxy($C_1$-$C_6$)alkyl methacrylates. Examples of these include the reaction product of 3-hydroxypropyl methacrylate and 2,4-toluene diisocyanate, and the reaction product of 2-hydroxyethyl acrylate and hexamethylene diisocyanate. Similarly, the reaction products of at least one compound selected from the di-and tri-epoxy functional compounds and at least one compound selected from acrylic acid and methacrylic acids may be employed. In addition, monomers selected from the reaction products of at least one compound selected from the di($C_1$-$C_4$)alkoxylated ($C_2$-$C_8$)alkanediols, tri($C_1$-C4)alkoxylated ($C_4$-$C_{12}$)alkane triols, and di($C_1$-$C_4$) alkoxylated bisphenol A, and at least one compound selected from acrylic acid and methacrylic acid may be employed. The reaction product of trimethylol propane and beta-acryloxypropionic acid may also be employed.

Alpha, beta-ethylenically unsaturated monomer having at least two sites of alpha, beta-ethylenic unsaturation may be referred to as "multifunctional monomer" (MFM). In addition to the multifunctional monomer which may be added to the first stage polymer during the second step of the process of preparing the compositions of this invention, monoethylenically unsaturated monomer may also be employed in this second step with the multifunctional monomer. This may be accomplished by preparing a mixture of mono-ethylenically unsaturated monomer and multifunctional monomer and adding this mixture to the first stage polymer. Alternatively, multifunctional monomer and monoethylenically unsaturated monomer may be added. Examples of mono-ethylenically unsaturated monomer which may be employed include the ($C_1$-$C_{12}$)alkyl esters of acrylic acid, the ($C_1$-$C_{12}$) alkyl esters of methacrylic acid and isobornyl methacrylate.

The additional monomer which is used should be selected such that the additional monomer comprises a substantial proportion of monomer having low water solubility. Monomers with low water solubility will be preferentially distributed into the hydrophobic phase of the aqueous dispersion, that is, into the water-insoluble latex polymer, wherein it may be subsequently polymerized. Thus, it is desirable to employ monomer with low water solubility as additional monomer. Low levels, less than about 5 weight percent, of water soluble monomers such as ethylenically unsaturated carboxylic acids such as methacrylic acid or acrylic acid may be included in the additional monomer. Examples of multifunctional monomers which have low water solubility include trimethylolpropane trimethacrylate (water solubility at 25°C: < 0.01 g/100 g $H_2O$=0.01 wt.%), 1,3-butyleneglycol dimethacrylate (< 0.01 wt.%), 1,4-butyleneglycol dimethacrylate (0.07 wt.%), 1,6-hexanediol diacrylate (0.05 wt.%), trimethylolpropane triacrylate (0.17 wt.%), ethyleneglycol dimethacrylate (0.28 wt.%), and diethyleneglycol dimethacrylate (0.33 wt.%).

In some preferred embodiments a nonionic monomer having a homopolymer Tg of greater than 50°C, such as methyl methacrylate or styrene or other styrenic monomers or a soft hydrophilic monomer having a homopolymer Tg less than 30°C and water solubility of 2% or greater at 25°C such as ethyl acrylate, methyl acrylate, vinyl acetate is added to the second stage polymer. As used herein, soft hydrophilic monomers have a homopolymer Tg less than about 30°C and water solubility of 2% or greater at 25°C. Ethyl acrylate, methyl acrylate, and vinyl acetate are examples of soft hydrophilic monomers.

Additionally, the polymer may contain additional plasticizers, tackifiers, crosslinkers, multi-valent metal ion salts, defoamers, thickeners, rheology modifiers, pigments, and wetting agents.

Specific tackifiers of the present invention include high softening point tackifiers. Typically they are present in ranges from upper limits of 50 and 25 wt.% to lower limits of 0.5 to 1 wt.% based on total weight of polymer. All ranges are inclusive and combinable. As used herein, high softening point tackifiers is defined as tackifiers having a softening point of 100°C or greater. Typically these compounds are added as an aqueous dispersion.

After the additional ethylenically unsaturated monomer is added to the first stage polymer, sufficient time is allowed to permit the additional monomer to swell the latex particles. The additional monomer which is used may be selected to include only those monomers which have low water solubility. By low water-solubility is meant a solubility in water at ambient temperature of less than about 2 g /100 g of water (2 wt.%). Preferably, the additional monomer is allowed to swell the first stage polymer until the monomer swollen first stage polymer has been swollen essentially to equilibrium with the additional alpha, beta-ethylenically unsaturated monomer. The aqueous dispersion may be agitated during the swelling process.

After the first stage polymer has been swollen essentially to equilibrium, the additional monomer is polymerized within the monomer swollen initial latex polymer. This second stage polymerization may be initiated by conventional free radical generating initiator systems. Preferably the initiation occurs by way of redox initiation.

For example, emulsion polymerization process may be a thermal or redox type; that is, free radicals may be generated solely by the thermal dissociation of an initiator species or a redox system may be used. A polymerization initiator of the free radical type, such as ammonium or potassium persulfate, may be used alone or as the oxidizing component of a redox system, which also includes a reducing component such as potassium metabisulfite, sodium thiosulfate, or sodium formaldehyde sulfoxylate. The reducing component is frequently referred to as an accelerator. The initiator and accelerator, commonly referred to as catalyst, catalyst system, or redox system, may be used in proportion from about 0.01% or less to 3% each, based on the weight of monomers to be polymerized. Examples of redox catalyst systems include t-butyl hydroperoxide/sodium formaldehyde sulfoxylate/Fe(II) and ammonium persulfate/ sodium bisulfite/sodium hydrosulfite/Fe(II). Other suitable initiators include azo compounds. The polymerization temperature may be from 10°C to 90°C, or more, and may be optimized for the catalyst system employed, as is conventional. Emulsion polymerization may be seeded or unseeded.

The latex polymer formed by the process of the present invention may be used in various adhesive product applications. Examples of application areas include tapes, labels, and graphics. Tapes, for example, may be coated on one or more sides with the latex polymer of the present invention. Methods to prepare these adhesives are commonly known to those of ordinary skill in the art.

## EXAMPLES

### Environmental Room Shear Experimental Test Method

For each of the emulsions, the emulsion was coated onto 0.0508 mm thick polyethylene terephthalate (PET) with a 0.038 mm Bird applicator at a rate to achieve approximately a 0.02 mm dry coating thickness and dried in a forced air oven for 5 minutes at 82°C. The coated film is laminated to a clear polyester film release liner with a roller and allowed to equilibrate at 22°C and 50% relative humidity overnight.

Clean, polished stainless steel panels and the adhesive film were equilibrated at 72°F and 50% relative humidity for a minimum of 4 hrs. The adhesive film was cut into 2.54 cm wide strips and laminated onto a stainless steel panel with a 1.82 kg roller at 61 cm/min twice (once to and once fro). Using a jig, a 2.54 cm by 2.54 cm contact area on the panel was cut with a tab protruding from the bottom of the panel to which a weight may be attached. These samples were conditioned at 97°F and 80 % relative humidity for 24 hrs. A 1 kg weight was suspended from each sample. The length of time for the 2.54 cm by 2.54 cm tab to be completely removed from the panel was recorded.

### Water Whitening Test Method

For each of the emulsions the emulsion was neutralized with ammonia to pH 8.2 to 8.6 and coated onto 0.0508 mm thick polyethylene terephthalate (PET) with a 0.038 mm Bird applicator at a rate to achieve approximately a 0.02 mm dry coating thickness and dried in a forced air oven for 5 minutes at 82°C. The coated film is laminated to a clear polyester film release liner with a roller and allowed to equilibrate at 22°C and 50% relative humidity overnight.

The opacity of this original laminate was measured using a Technidyne Corporation Opacimeter, Model BLN-3. A 2.54 cm by 30.5 cm strip of the laminate was opened and the coated film was immersed in deionized water at room temperature for 1 hour. The strips were removed from the water and immediately laminated to another piece of the same release liner. The opacity of the new laminate is then immediately measured. The 1 hour water whitening value is the opacity measured for the original laminate before immersion subtracted from the opacity of the new laminate.

A second sample of the original laminate was treated in the same fashion with the exception of being immersed in deionized water for 24 hours at room temperature. The 24 hour water whitening value is the opacity before immersion subtracted from the opacity of the new laminate after 24 hours of immersion.

### Comparative Example 1

Step 1 - Polymerization of first polymer

A monomer emulsion containing the following materials was prepared:

| | |
|---|---|
| DI Water | 623.6 g |
| butyl acrylate | 1768.9 g |
| methacrylic acid | 36.1 g |
| Triton™ X-405 surfactant (70%) | 25.8 g |
| sodium dodecylbenzene sulfonate (23%) | 7.85 g |

Into a 5 liter, four-neck, round-bottomed flask equipped with a stirrer, thermometer, and reflux condenser was charged 841.5 g of deionized (DI) water which was heated to 83°-85°C in a nitrogen atmosphere. A catalyst cofeed solution of 1.97 g sodium persulfate / $H_2O$ in 139.9 g DI water was prepared.

At 83°-86°C the following materials were charged to the kettle:

| | |
|---|---|
| $Na_2CO_3/H_2O$ | 1.23 g / 12.3 g |
| $Na_2S_2O_8/H_2O$ | 5.9 g / 24.6 g |
| 100 nm polymer seed emulsion (45%) | 103.5 g |
| Rinse water for seed emulsion | 20.5 g |

Immediately after these charges, the monomer emulsion and the cofeed catalyst solution were fed at a rate calculated to give a 180 minute feed. A temperature of 80°-82°C was maintained by cooling as required.
Near the end of the monomer emulsion and catalyst solution feeds the following solutions were prepared:

| | | |
|---|---|---|
| Neutralizer 4.1 g Aq. $NH_3$/12.3 g $H_2O$ | | |
| Chaser A | $FeSO_4$ (0.15% Soln.) | 5.47 g |
| Chaser B | t-Butyl hydroperoxide (70%) | 0.41 g |
| | DI $H_2O$ | 12.3 g |
| Chaser C | sodium sulfoxylate formaldehyde | 0.41 g |
| | DI $H_2°$ | 24.6 g |

When the monomer emulsion and the catalyst solution feeds were complete, the temperature was held at 80°-82° C for 10 minutes before the neutralizer was added. The reaction was then cooled to 60°C where chasers A, B, and C were added. The reaction was held for 15 minutes at temperature, cooled to room temperature with stirring and allowed to sit overnight.

Step 2 - Addition and polymerization of additional monomers

The reaction was warmed to 25° C under nitrogen with stirring. 95 g 1,3-butylene glycol dimethacrylate was added over 5 minutes and stirred for 30 minutes under nitrogen. 1.33 g 70% aqueous t-butyl hydroperoxide in 17.4 grams DI water was added to the reactor followed immediately by 152 g of a 3% vanadyl sulfate solution. A 4 degree exotherm was observed and the reaction was held for 60 minutes with stirring.
The reaction was cooled and filtered through a 100 mesh (0. 149 mm sieve opening) screen to give an emulsion polymer at pH of 5.1 and solids of 50%.

Comparative Example 2

Comparative Example 2 was prepared according the procedure of Comparative Example 1 with the exception that 216.6 grams of butyl acrylate was replaced with 216.6 grams of methyl methacrylate.

Comparative Example 3

Comparative Example 3 was prepared according the procedure of Comparative Example 1 with the exception that 451.25 grams of butyl acrylate was replaced with 451.25 grams of methyl methacrylate.

Comparative Example 4

Comparative Example 4 was prepared according the procedure of Comparative Example 1 with the exceptions that 451.25 grams of butyl acrylate was replaced with 451.25 grams of ethyl acrylate and the reaction was terminated after Step 1. No Step 2 was performed.

Example 1

Example 1 was prepared according the procedure of Comparative Example 1 with the exception that 216.6 grams of butyl acrylate was replaced with 216.6 grams of ethyl acrylate.

Example 2

Example 2 was prepared according the procedure of Comparative Example 1 with the exception that 451.25 grams of butyl acrylate was replaced with 451.25 grams of ethyl acrylate.

Example 3

Example 3 was prepared according the procedure of Comparative Example 1 with the exception that 722 grams of butyl acrylate was replaced with 722 grams of ethyl acrylate.

Example 4

Example 4 is prepared according the procedure of Example 1 with the exception that 54.1 grams of butyl acrylate is replaced with 54.1 grams of methyl methacrylate.

Example 5

Example 5 is prepared according the procedure of Example 1 with the exception that 36.1 grams of butyl acrylate is replaced with 36.1 grams of styrene.

Example 6

Example 6 is prepared according the procedure of Example 1 with the exception that 27 grams of butyl acrylate is replaced with 27 grams of acrylamide.

Example 7

Example 7 is prepared according the procedure of Example 1 with the exception that the surfactants in the monomer emulsion are replaced with 24 grams Hitenol™ BC-20 (Polyoxyethylene alkylphenyl ether ammonium sulfate)

|  | Water Whitening* | | Shear |
|  | 1 Hr | 24 Hrs | (hours) |
| --- | --- | --- | --- |
| Comparative 1 (US 4,814,373 Example 1) | 5.8 | 24.8 | 49.75 |
| Comparative 2 (US 4,814,373 Example 4) | 4.7 | 24.4 | > 163 |
| Comparative 3 (US 4,814,373 Example 15) | 8.0 | 30.2 | > 163 |
| Comparative 4 | 0.2 | 7.8 | 14.5 |
| Example 1 | 2.0 | 16.6 | 56.55 |
| Example 2 | 2.2 | 17.1 | 85.25 |
| Example 3 | 0.9 | 14.0 | > 163 |
| Example 4 | Similar to Example 1 | Similar to Example 1 | Similar to > example 1 |
| Example 5 | Similar to Example 1 | Similar to Example 1 | > example 1 |
| Example 6 | Equal to or better than Example 1 | Equal to or better than Example 1 | Equal to or better than Example 1 |
| Example 7 |  |  |  |

**Claims**

1.    A latex polymer prepared by a process comprising:

(a) preparing by emulsion polymerization a first stage polymer of at least one ethylenically unsaturated monomer, wherein said first stage polymer comprises:

i) at least 40% of a monomer having a homopolymer Tg of less than -40°C; and
ii) 10 to 50% of a soft hydrophilic, nonionic monomer having a homopolymer Tg of less than 30°C;

(b) dispersing in the first stage polymer, additional ethylenically unsaturated monomer comprising at least one monomer having at least two sites of alpha, beta-ethylenic unsaturation, whereby the additional monomer swells the first stage polymer, and

(c) polymerizing the additional monomer within the monomer-swollen first stage polymer.

2. The latex polymer of claim 1 wherein the additional ethylenically unsaturated monomer is present from 0.25 to 10% by weight based upon total weight of the first polymer.

3. The latex polymer of claim 1 wherein the first polymer further comprises 0.25 to 5% nonionic monomer having a Tg of greater than 50°C.

4. The latex polymer of claim 1 wherein the polymer further comprises polymerizable surfactant.

5. The latex polymer of claim 1 wherein the polymer further comprises tackifier.

6. The latex polymer of claim 3 wherein the polymer further comprises tackifier.

7. The latex polymer of claim 6 wherein the tackifier has a softening point of 100°C or greater.

8. An adhesive product comprising the latex polymer of claim 1 wherein the adhesive product is a tape, label, or graphic.

**Patentansprüche**

1. Polymerlatex, hergestellt durch ein Verfahren, umfassend:

(a) das Herstellen durch Emulsionspolymerisation eines Polymers erster Stufe von mindestens einem ethylenisch ungesättigten Monomer, wobei das Polymer erster Stufe umfaßt:

i) mindestens 40% eines Monomers mit einer Homopolymer-Tg von weniger als -40°C und
ii) 10 bis 50% eines weichen hydrophilen, nicht-ionischen Monomers mit einer Homopolymer-Tg von weniger als 30°C,

(b) das Dispergieren von zusätzlichem ethylenisch ungesättigten Monomer, umfassend mindestens ein Monomer mit mindestens zwei Stellen von alpha,beta-ethylenischer Ungesättigtheit in dem Polymer erster Stufe, wobei das zusätzliche Monomer das Polymer erster Stufe quillt, und
(c) das Polymerisieren des zusätzlichen Monomers innerhalb des Monomergequollenen Polymers erster Stufe.

2. Polymerlatex gemäß Anspruch 1, wobei das zusätzliche ethylenisch ungesättigte Monomer von 0,25 bis 10 Gew.-%, bezogen auf das Gesamtgewicht des ersten Polymers, vorliegt.

3. Polymerlatex gemäß Anspruch 1, wobei das erste Polymer weiter 0,25 bis 5% nicht-ionisches Monomer mit einer Tg von größer als 50°C umfaßt.

4. Polymerlatex gemäß Anspruch 1, wobei das Polymer weiter ein polymerisierbares grenzflächenaktives Mittel umfaßt.

5. Polymerlatex gemäß Anspruch 1, wobei das Polymer weiter einen Klebrigmacher umfaßt.

6. Polymerlatex gemäß Anspruch 3, wobei das Polymer weiter einen Klebrigmacher umfaßt.

7. Polymerlatex gemäß Anspruch 6, wobei der Klebrigmacher einen Erweichungspunkt von 100°C oder höher aufweist.

8. Haftmittelprodukt, umfassend den Polymerlatex gemäß Anspruch 1, wobei das Haftmittelprodukt ein Band, Etikett oder eine Graphik ist.

**Revendications**

1. Polymère de latex préparé par un procédé comprenant :

(a) la préparation par polymérisation en émulsion d'un polymère de première étape d'au moins un monomère éthyléniquement insaturé, dans laquelle ledit polymère de première étape comprend :

i) au moins 40 % d'un monomère présentant une Tg d'homopolymère inférieure à -40°C ; et
ii) de 10 à 50 % d'un monomère souple hydrophile, non ionique ayant une Tg d'homopolymère inférieure à 30°C ;

(b) la dispersion dans le polymère de première étape, de monomère supplémentaire éthyléniquement insaturé comprenant au moins un monomère présentant au moins deux sites d'insaturation alpha, bêta-éthylénique, le monomère supplémentaire gonfle par là le polymère de première étape, et
(c) la polymérisation du monomère supplémentaire dans le polymère de premier étape monomère-gonflé.

2. Polymère de latex selon la revendication 1, dans lequel le monomère supplémentaire éthyléniquement insaturé est présent à de 0,25 à 10 % en poids rapporté au poids total du premier polymère.

3. Polymère de latex selon la revendication 1, dans lequel le premier polymère comprend de plus de 0,25 à 5 % de monomère non ionique ayant une Tg supérieure à 50°C.

4. Polymère de latex selon la revendication 1, dans lequel le polymère comprend de plus un tensioactif polymérisable.

5. Polymère de latex selon la revendication 1, dans lequel le polymère comprend de plus un agent adhésif.

6. Polymère de latex selon la revendication 3, dans lequel le polymère comprend de plus un agent adhésif.

7. Polymère de latex selon la revendication 6, dans lequel l'agent adhésif présente un point de fusion de 100°C ou supérieur.

8. Produit adhésif comprenant le polymère de latex selon la revendication 1, dans lequel le produit adhésif est une bande, une étiquette ou un graphique.

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- US 6060532 A
- US 20030149119 A
- US 5362832 A
- US 4246387 A
- JP 62227435 A
- US 4912169 A
- US 4814373 A

### Non-patent literature cited in the description

- **H. WARSON.** The Applications of Synthetic Resin Emulsions. Ernest Benn Ltd, 1972
- *Bulletin of the American Physical Society,* 1956, vol. 1 (3), 123
- Polymer Handbook. Interscience Publishers
- **D. C. BLACKLEY.** Emulsion Polymerization. Wiley, 1975